# EUROPÄISCHE PATENTSCHRIFT

(11) **EP 3 054 544 B1**
(45) Veröffentlichungstag und Bekanntmachung des Hinweises auf die Patenterteilung: **07.03.2018**
(21) Anmeldenummer: 16154655.1
(22) Anmeldetag: 08.02.2016
(51) Int. Cl.: H02G 11/02

(54) **KABELTROMMEL ZUR STROMVERSORGUNG EINES LANDWIRTSCHAFTLICHEN GERÄTS MIT ELEKTRISCHER ENERGIE**
POWER SUPPLY CABLE DRUM FOR AGRICULTURAL EQUIPMENT WITH ELECTRICAL ENERGY
TAMBOUR À CABLE DESTINÉ À ALIMENTER EN ÉNERGIE ÉLECTRIQUE UN APPAREIL AGRICOLE

(30) Priorität: 09.02.2015 DE 102015202259
(43) Veröffentlichungstag der Anmeldung: 10.08.2016
(73) Patentinhaber: Deere & Company, Moline, IL 61265 (US)
(72) Erfinder: Kegel, Volker, 68165 Mannheim (DE)
(74) Vertreter: Dehnhardt, Florian Christopher

(56) Entgegenhaltungen:
- EP-A1- 1 361 636
- DE-A1-102013 009 768
- DE-C- 268 730

## Beschreibung

Die Erfindung betrifft eine Kabeltrommel zur Versorgung eines landwirtschaftlichen Geräts mit elektrischer Energie.
Im Zuge der Elektrifizierung landwirtschaftlicher Geräte sowie des insofern zunehmenden Leistungsbedarfs besteht der Wunsch, elektrische Energie auch über größere Entfernungen von einer (zentralen) Stromversorgungseinrichtung hoher Leistung zu einem von dem landwirtschaftlichen Gerät umfassten elektrischen Verbraucher transportieren zu können. Eine der Möglichkeiten ist die Verwendung von Kabeltrommeln, wobei diese je nach Einsatzzweck in der Lage sein sollen, mehrere hundert Meter Stromversorgungskabel auf einem zugehörigen Trommelkörper aufzunehmen. Neben Versorgungsadern zur Übertragung elektrischen Stroms sowie zusätzlichen Steuerleitungen weisen diese üblicherweise einen Schutzleiter auf, über den ein Fehlerstrom mittels einer auf Seiten der Stromversorgungseinrichtung vorgesehenen Schutzschaltung (FI-Schalter) detektiert werden kann, wobei die Schutzschaltung bei Auftreten eines Fehlerstroms die Verbindung zur Stromversorgungseinrichtung unverzüglich unterbricht. Im Gegensatz zu den Versorgungsadern des Stromversorgungskabels, deren Induktivitäten sich aufgrund ihrer gegenseitigen räumlichen Nähe sowie der darin entgegengesetzt fließenden elektrischen Ströme im Wesentlichen gegenseitig aufheben, bilden die auf den Trommelkörper aufgewickelten Schutzleiterwindungen eine Induktivität entsprechender Impedanz. Je nach Anzahl der Schutzleiterwindungen kann diese erhebliche Werte annehmen. Dies kann dazu führen, dass die Schutzschaltung einen im Schutzleiter fließenden Fehlerstrom nicht mehr einwandfrei detektieren kann.

DE102013009768 offenbart eine Kabeltrommel nach dem Oberbegriff des Anspruchs 1. Es ist daher Aufgabe der vorliegenden Erfindung, eine Kabeltrommel der eingangs genannten Art dahingehend weiterzubilden, dass diese eine verlässliche Detektion eines im Schutzleiter fließenden Fehlerstroms sicherstellt.

Diese Aufgabe wird durch eine Kabeltrommel mit den Merkmalen des Patentanspruchs 1 gelöst.

Die Kabeltrommel zur Stromversorgung eines landwirtschaftlichen Geräts mit elektrischer Energie umfasst einen Trommelkörper sowie ein auf den Trommelkörper aufwickelbares mehradriges Stromversorgungskabel mit einem Schutzleiter. Erfindungsgemäß ist zur zumindest teilweisen Kompensation der Impedanz von auf den Trommelkörper aufgewickelten Schutzleiterwindungen eine Anordnung zum Kurzschließen der Schutzleiterwindungen und/oder zur Erzeugung eines die Schutzleiterwindungen durchdringenden magnetischen Kompensationsfelds vorgesehen.

Da kurzgeschlossene Schutzleiterwindungen keinen Beitrag zur Induktivität und damit zur Impedanz des Schutzleiters leisten bzw. sich durch geeignete Wahl der Feldstärke des magnetischen Kompensationsfelds der Induktivität und damit der Impedanz der Schutzleiterwindungen gezielt entgegenwirken lässt, ist es möglich, eine verlässliche Detektion eines im Schutzleiter fließenden Fehlerstroms sicherzustellen. Eine Verwendung komplexer Impedanzkorrekturnetzwerke, die aus einer Vielzahl passiver Bauelemente wie Spulen, Kondensatoren und Widerständen bestehen, erübrigt sich.

Die Kabeltrommel kann der Energieversorgung bzw. Steuerung elektrischer Verbraucher eines landwirtschaftlichen Geräts, beispielsweise eines als landwirtschaftlicher Traktor ausgebildeten mobilen landwirtschaftlichen Arbeitsgeräts, dienen. Zu diesem Zweck kann das Stromversorgungskabel neben dem Schutzleiter sowie zugehörigen Versorgungsadern, deren Anzahl sich aus der Art des zu übertragenden elektrischen Stroms ergibt, eine Vielzahl von Steuerleitungen aufweisen. Die Kabeltrommel kann stationär am Feldrand aufgestellt und dort mit einer zentralen Stromversorgungseinrichtung in Gestalt eines Hochspannungsnetzes verbunden sein. Ein elektrischer Wickelantrieb passt die abgespulte Länge des Stromversorgungskabels von selbst entsprechend dem momentanen Abstand zum mobilen landwirtschaftlichen Arbeitsgerät an.

Vorteilhafte Ausführungen der erfindungsgemäßen Kabeltrommel gehen aus den Unteransprüchen hervor.

Vorzugsweise ist die Anordnung zum Kurzschließen der Schutzleiterwindungen durch einen leitenden Außenmantel des Stromversorgungskabels gebildet.

Aneinander liegende Schutzleiterwindungen sind in diesem Fall leitend über den Außenmantel des Stromversorgungskabels kurzgeschlossen. Diese Ausführungsform ist baulich besonders kompakt, da die zumindest teilweise Kompensation der Impedanz durch den Schutzleiter selbst erfolgt. Der leitende Außenmantel ist über zugehörige Verbindungsmittel mit einem ersten Ende an einem Fühleranschluss der Schutzschaltung der Stromversorgungseinrichtung und mit einem zweiten Ende an einem gemeinsamen Erdungsanschluss der elektrischen Verbraucher des landwirtschaftlichen Geräts anschließbar.

Hierbei ist es denkbar, dass der leitende Außenmantel aus einem das Stromversorgungskabel umgebenden Metallgeflecht und/oder aus metallisiertem oder leitendem Kunststoff besteht.

Das Metallgeflecht ist beispielsweise aus korrosionsbeständigem Edelstahl hergestellt und umgibt das Stromversorgungskabel in Gestalt eines gegenüber Biegebeanspruchungen flexiblen Geflechtschlauchs. Bei dem leitenden Kunststoff kann es sich um ein graphitgefülltes Thermoplast handeln, wohingegen eine Metallisierung des leitenden Außenmantels durch Einlagerung von Metallpartikeln mittels eines Vakuumbeschichtungsverfahrens oder dergleichen erfolgen kann.

Die Anordnung zur Erzeugung eines die Schutzleiterwindungen durchdringenden magnetischen Kompensationsfelds kann an axial gegenüberliegenden Enden des Trommelkörpers angeordnete Helmholtzspulen aufweisen, wobei die Helmholtzspulen derart mit dem Schutzleiter verschaltet und dimensioniert sind, dass die Impedanz der Schutzleiterwindungen zumindest teilweise kompensiert wird. Vorzugsweise sind die aus Kupferlackdraht bestehenden Helmholtzspulen in gegenüberliegenden Wickelflanschen des Trommelkörpers eingebettet und verlaufen bezüglich der Wickelachse der Kabeltrommel rotationssymmetrisch. Die Helmholtzspulen erlauben es, innerhalb der dazwischen liegenden Schutzleiterwindungen ein homogenes magnetisches Feld aufzubauen. Die Windungen der Helmholtzspulen verlaufen hierbei gegensinnig zu den Schutzleiterwindungen und sind mit diesen derart in Reihe geschaltet, dass bei Auftreten eines im Schutzleiter fließenden Fehlerstroms ein magnetisches Gegenfeld aufgebaut wird, das der Induktivität und damit der Impedanz der Schutzleiterwindungen entgegenwirkt.

Da die Anzahl der Schutzleiterwindungen und damit deren Induktivität mit dem Bewicklungszustand der Kabeltrommel schwankt, besteht die Möglichkeit, dass die Helmholtzspulen derart dimensioniert sind, dass sich die Induktivitäten der Helmholtzspulen sowie der Schutzleiterwindungen bei in etwa halb bewickelter Kabeltrommel gegenseitig aufheben. Auf diese Weise ist sichergestellt, dass auch bei geringerer oder stärkerer Bewicklung der Kabeltrommel eine noch akzeptable (Teil-) Kompensation der Impedanz erfolgt.

Zusätzlich kann auch eine Schalteinrichtung vorgesehen sein, die je nach momentanem Bewicklungszustand der Kabeltrommel eine oder mehrere Windungen der Helmholtzspulen im Sinne einer Anpassung der Induktivität an diejenige der Schutzleiterwindungen gezielt hinzuschaltet oder überbrückt. Der momentane Bewicklungszustand lässt sich beispielsweise aus Drehgebersignalen eines von der Kabeltrommel umfassten elektrischen Wickelantriebs ableiten.

Die erfindungsgemäße Kabeltrommel wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine erste beispielhafte Ausführungsform der erfindungsgemäßen Kabeltrommel zur Versorgung eines landwirtschaftlichen Geräts mit elektrischer Energie, und
- Fig. 2: eine zweite beispielhafte Ausführungsform der erfindungsgemäßen Kabeltrommel zur Versorgung eines landwirtschaftlichen Geräts mit elektrischer Energie.

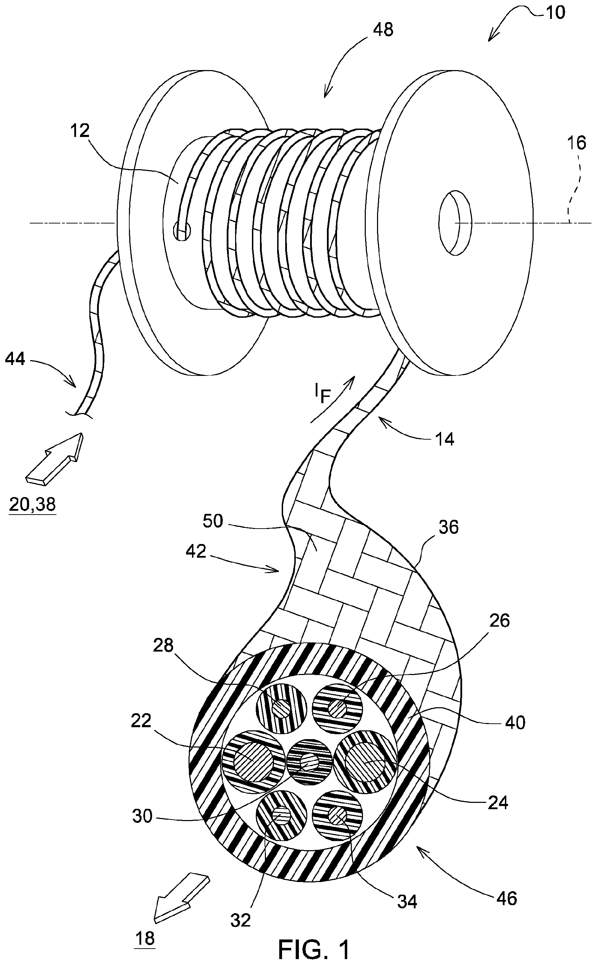

Fig. 1 zeigt eine erste beispielhafte Ausführungsform der erfindungsgemäßen Kabeltrommel zur Versorgung eines landwirtschaftlichen Geräts mit elektrischer Energie.

Die Kabeltrommel 10 umfasst einen Trommelkörper 12 sowie ein auf den Trommelkörper 12 aufwickelbares mehradriges Stromversorgungskabel 14. Eine nicht dargestellte Halterung dient der drehbaren Lagerung des Trommelkörpers 12 entlang einer Wickelachse 16.

Bei dem nicht dargestellten landwirtschaftlichen Gerät handelt es sich beispielsweise um ein als landwirtschaftlicher Traktor ausgebildetes mobiles Arbeitsgerät, wobei die Kabeltrommel 10 der Energieversorgung bzw. Steuerung elektrischer Verbraucher 18, wie eines elektrischen Fahrantriebs sowie elektrischer Zusatzaggregate des landwirtschaftlichen Traktors, dient. Die Kabeltrommel 10 wird stationär am Feldrand aufgestellt und dort mit einer zentralen Stromversorgungseinrichtung 20 in Gestalt eines Hochspannungsnetzes verbunden. Ein der Halterung zugeordneter elektrischer Wickelantrieb passt die abgespulte Länge des Stromversorgungskabels 14 von selbst entsprechend dem momentanen Abstand zum landwirtschaftlichen Traktor an.

Das Stromversorgungskabel 14 weist neben mehreren Versorgungsadern 22, 24 zur Übertragung elektrischen Stroms sowie zusätzlichen Steuerleitungen 26, 28, 30, 32, 34 einen Schutzleiter 36 auf, über den ein Fehlerstrom I_{F} mittels einer auf Seiten der Stromversorgungseinrichtung 20 vorgesehenen Schutzschaltung 38 (FI-Schalter) detektiert werden kann. Eine isolierende Ummantelung 40 dient dem Schutz der innenliegenden Versorgungsadern 22, 24 bzw. Steuerleitungen 26, 28, 30, 32, 34. Beispielsgemäß weist das Stromversorgungskabel 14 zwei separate Versorgungsadern 22, 24 zur Übertragung von Gleichstrom oder zweiphasigem Wechselstrom auf. Abweichend davon kann jedoch auch eine abweichende Anzahl von Versorgungsadern vorgesehen sein, so zum Beispiel drei separate Versorgungsadern zur Übertragung von dreiphasigem Drehstrom. Ähnliche Betrachtungen gelten für die Anzahl der Steuerleitungen, die sich aus dem Umfang der über das Stromversorgungskabel 14 zu übertragenden Steuerbefehle ergibt.

Der Schutzleiter 36 ist vorliegend durch einen leitenden Außenmantel 42 des Stromversorgungskabels 14 gebildet, wobei dieser über zugehörige Verbindungsmittel mit einem ersten Ende 44 an einem Fühleranschluss der Schutzschaltung 38 der Stromversorgungseinrichtung 20 und mit einem zweiten Ende 46 an einem gemeinsamen Erdungsanschluss der elektrischen Verbraucher 18 angeschlossen ist.

Beispielsgemäß ist ein Teil des Schutzleiters 36 auf den Trommelkörper 12 aufgewickelt und bildet dort zugehörige Schutzleiterwindungen 48. Aneinander liegende Schutzleiterwindungen 48 sind in diesem Fall leitend über den Außenmantel 42 kurzgeschlossen, sodass diese zur Induktivität und damit zur Impedanz des Schutzleiters 36 keinen Beitrag leisten.

Der leitende Außenmantel 42 besteht aus einem das Stromversorgungskabel 14 bzw. dessen isolierende Ummantelung 40 umgebenden Metallgeflecht 50. Das Metallgeflecht 50 ist aus korrosionsbeständigem Edelstahl hergestellt und umgibt das Stromversorgungskabel 14 in Gestalt eines gegenüber Biegebeanspruchungen flexiblen Geflechtschlauchs. Das Metallgeflecht 50 bildet zugleich einen mechanischen Schutz gegenüber äußeren Beschädigungen des Stromversorgungskabels 14. Da das Metallgeflecht 50 das Stromversorgungskabel 14 nahezu vollflächig umhüllt (der Bedeckungsgrad herkömmlicher Geflechtschläuche liegt bei über 90 %), ist über dieses ein aufgrund beschädigungsbedingt freigelegter Versorgungsadern 22, 24 fließender Fehlerstrom I_{F} zuverlässig in Richtung der Schutzschaltung 38 ableitbar.

Alternativ besteht der leitende Außenmantel 42 aus metallisiertem und/oder leitendem Kunststoff. Bei dem leitenden Kunststoff handelt es sich um ein graphitgefülltes Thermoplast, wohingegen eine Metallisierung des leitenden Außenmantels 42 durch Einlagerung von Metallpartikeln mittels eines Vakuumbeschichtungsverfahrens erfolgt.

Unabhängig von seiner jeweiligen Ausgestaltung bildet der leitende Außenmantel 42 daher eine Anordnung zum Kurzschließen der Schutzleiterwindungen 48, die es erlaubt, die Impedanz der Schutzleiterwindungen 48 zumindest teilweise zu kompensieren.

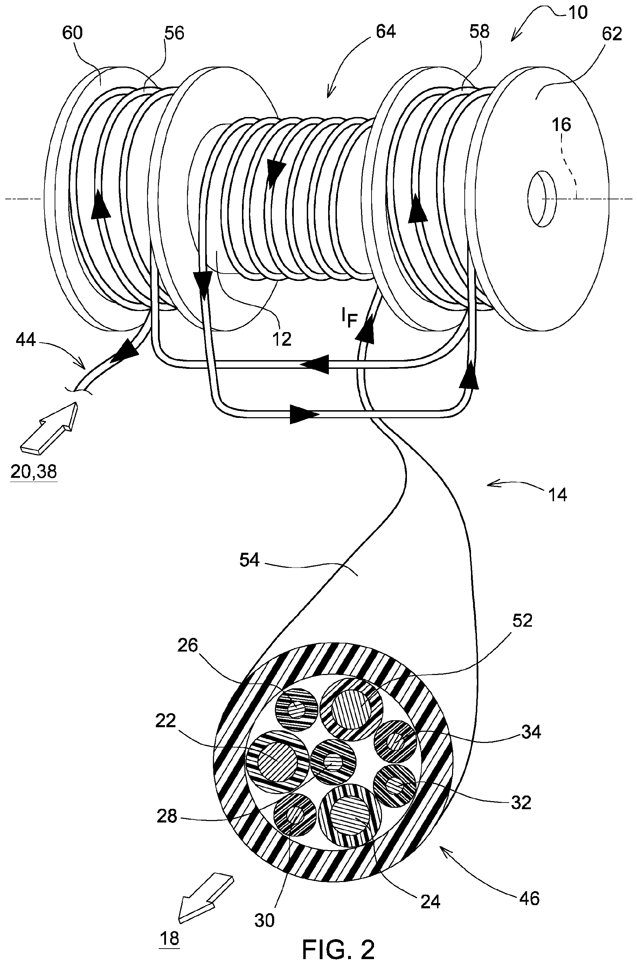

Fig. 2 zeigt eine zweite beispielhafte Ausführungsform der erfindungsgemäßen Kabeltrommel zur Versorgung eines landwirtschaftlichen Geräts mit elektrischer Energie.

Im Gegensatz zu der in Fig. 1 dargestellten ersten Ausführungsform ist das Stromversorgungskabel 14 von konventioneller Bauart und weist anstelle eines leitenden Außenmantels 42 einen einadrigen Schutzleiter 52 auf, der gemeinsam mit den Versorgungsadern 22, 24 sowie den Steuerleitungen 26, 28, 30, 32, 34 von einer isolierenden Ummantelung 54 umgeben ist. Aus Gründen der besseren Verständlichkeit ist in Fig. 2 ausschließlich der Verlauf des Schutzleiters 52 wiedergegeben.

Beispielsgemäß sind an axial gegenüberliegenden Enden des Trommelkörpers 12 zugehörige Helmholtzspulen 56, 58 angeordnet. Die aus Kupferlackdraht bestehenden Helmholtzspulen 56, 58 sind in zugehörigen Wickelflanschen 60, 62 des Trommelkörpers 12 eingebettet und verlaufen bezüglich der Wickelachse 16 der Kabeltrommel 10 rotationssymmetrisch. Die Helmholtzspulen 56, 58 erlauben es, innerhalb dazwischen liegender Schutzleiterwindungen 64 ein homogenes magnetisches Feld aufzubauen. Die Windungen der Helmholtzspulen 56, 58 verlaufen gegensinnig zu den Schutzleiterwindungen 64 und sind mit diesen derart in Reihe geschaltet, dass bei Auftreten eines Fehlerstroms I_{F} ein magnetisches Gegenfeld aufgebaut wird, das der Induktivität und damit der Impedanz der Schutzleiterwindungen 64 gezielt entgegenwirkt.

Da die Anzahl der Schutzleiterwindungen 64 und damit deren Induktivität mit dem Bewicklungszustand der Kabeltrommel 10 schwankt, sind die Helmholtzspulen 56, 58 derart dimensioniert, dass sich die Induktivitäten der Helmholtzspulen 56, 58 sowie der Schutzleiterwindungen 64 bei in etwa halb bewickelter Kabeltrommel 10 gegenseitig aufheben.

Zusätzlich kann auch eine nicht dargestellte Schalteinrichtung vorgesehen sein, die je nach momentanem Bewicklungszustand der Kabeltrommel 10 eine oder mehrere Windungen der Helmholtzspulen 56, 58 im Sinne einer Anpassung der Induktivität an diejenige der Schutzleiterwindungen 64 gezielt hinzuschaltet oder überbrückt. Der momentane Bewicklungszustand lässt sich beispielsweise aus Drehgebersignalen des elektrischen Wickelantriebs ableiten.

Allgemein gesprochen bilden die Helmholtzspulen 56, 58 also eine Anordnung zur Erzeugung eines die Schutzleiterwindungen 64 durchdringenden magnetischen Kompensationsfelds, wobei diese derart mit dem Schutzleiter 52 verschaltet sind, dass die Impedanz der aufgewickelten Schutzleiterwindungen 64 zumindest teilweise kompensiert wird.

## Patentansprüche

1. Kabeltrommel zur Stromversorgung eines landwirtschaftlichen Geräts mit elektrischer Energie, umfassend einen Trommelkörper (12) sowie ein auf den Trommelkörper (12) aufwickelbares mehradriges Stromversorgungskabel (14) mit einem Schutzleiter (36, 52), **dadurch gekennzeichnet, dass** zur zumindest teilweisen Kompensation der Impedanz von auf den Trommelkörper (12) aufgewickelten Schutzleiterwindungen (48, 64) eine Anordnung (42, 56, 58) zum Kurzschließen der Schutzleiterwindungen (48) und/oder zur Erzeugung eines die Schutzleiterwindungen (64) durchdringenden magnetischen Kompensationsfelds vorgesehen ist.

2. Kabeltrommel nach Anspruch 1, **dadurch gekennzeichnet, dass** die Anordnung zum Kurzschließen der Schutzleiterwindungen (48) durch einen leitenden Außenmantel (42) des Stromversorgungskabels (14) gebildet ist.

3. Kabeltrommel nach Anspruch 2, **dadurch gekennzeichnet, dass** der leitende Außenmantel (42) aus einem das Stromversorgungskabel (14) umgebenden Metallgeflecht (50) und/oder aus metallisiertem oder leitendem Kunststoff besteht.

4. Kabeltrommel nach wenigstens einem der Ansprüche 1 bis 3, **dadurch gekennzeichnet, dass** die Anordnung zur Erzeugung eines die Schutzleiterwindungen (64) durchdringenden magnetischen Kompensationsfelds an axial gegenüberliegenden Enden des Trommelkörpers (12) angeordnete Helmholtzspulen (56, 58) aufweist, wobei die Helmholtzspulen (56, 58) derart mit dem Schutzleiter (52) verschaltet und dimensioniert sind, dass die Impedanz der aufgewickelten Schutzleiterwindungen (64) zumindest teilweise kompensiert wird.

5. Kabeltrommel nach Anspruch 4, **dadurch gekennzeichnet, dass** die Helmholtzspulen (56, 58) derart dimensioniert sind, dass sich die Induktivitäten der Helmholtzspulen (56, 58) sowie der Schutzleiterwindungen (64) bei in etwa halb bewickelter Kabeltrommel (10) gegenseitig aufheben.

6. Kabeltrommel nach Anspruch 4, **dadurch gekennzeichnet, dass** eine Schalteinrichtung vorgesehen ist, die je nach momentanem Bewicklungszustand der Kabeltrommel (10) eine oder mehrere Windungen der Helmholtzspulen (56, 58) im Sinne einer Anpassung der Induktivität an diejenige der Schutzleiterwindungen (64) hinzuschaltet oder überbrückt.

## Claims

1. Cable drum for supplying electrical energy to an agricultural device, comprising a drum body (12) and also a multicore power supply cable (14) which can be wound onto the drum body (12) and has a protective conductor (36, 52), **characterized in that**, for the purpose of at least partially compensating for the impedance of protective conductor turns (48, 64) which are wound onto the drum body (12), an arrangement (42, 56, 58) for short-circuiting the protective conductor turns (48) and/or for generating a magnetic compensating field which passes through the protective conductor turns (64) is provided.

2. Cable drum according to Claim 1, **characterized in that** the arrangement for short-circuiting the protective conductor turns (48) is formed by a conductive outer casing (42) of the power supply cable (14).

3. Cable drum according to Claim 2, **characterized in that** the conductive outer casing (42) is composed of a metal braid (50) which surrounds the power supply cable (14) and/or of metallized or conductive plastic.

4. Cable drum according to at least one of Claims 1 to 3, **characterized in that** the arrangement for generating a magnetic compensating field which passes through the protective conductor turns (64) has Helmholtz coils (56, 58) which are arranged at axially opposite ends of the drum body (12), wherein the Helmholtz coils (56, 58) are interconnected with the protective conductor (52) and dimensioned in such a way that the impedance of the wound-on protective conductor turns (64) is at least partially compensated for.

5. Cable drum according to Claim 4, **characterized in that** the Helmholtz coils (56, 58) are dimensioned in such a way that the inductances of the Helmholtz coils (56, 58) and also of the protective conductor turns (64) cancel each other out when approximately half of the cable drum (10) is wrapped.

6. Cable drum according to Claim 4, **characterized in that** a switching device is provided, which, depending on the current wrapping state of the cable drum (10), connects or bridges one or more turns of the Helmholtz coils (56, 58) for the purpose of matching the inductance to that of the protective conductor turns (64).

## Revendications

1. Tambour de câble destiné à alimenter en énergie électrique un appareil agricole, comprenant un corps de tambour (12) ainsi qu'un câble d'alimentation électrique multiconducteur enroulable (14) sur le corps de tambour (12), comportant un conducteur de protection (36, 52), **caractérisé en ce que**, pour compenser au moins partiellement l'impédance des spires de conducteur de protection (48, 64) enroulées sur le corps de tambour (12), il est prévu un système (42, 56, 58) destiné à court-circuiter les spires de conducteur de protection (48) et/ou à générer un champ magnétique de compensation pénétrant à travers les spires de conducteur de protection (64).

2. Tambour de câble selon la revendication 1, **caractérisé en ce que** le système est conçu pour court-circuiter les spires de conducteur de protection (48) par l'intermédiaire d'une gaine extérieure conductrice (42) du câble d'alimentation électrique (14).

3. Tambour de câble selon la revendication 2, **caractérisé en ce que** la gaine extérieure conductrice (42) est constituée d'un treillis métallique (50) entourant le câble d'alimentation électrique (14) et/ou d'une matière plastique métallisée ou conductrice.

4. Tambour de câble selon au moins l'une des revendications 1 à 3, **caractérisé en ce que** le système destiné à générer un champ magnétique de compensation pénétrant à travers les spires de conducteur de protection (64) comporte des bobines de Helmholtz (56, 58) disposées sur des extrémités axialement opposées du corps de tambour (12), dans lequel les bobines de Helmholtz (56, 58) sont connectées au conducteur de protection (52) et sont dimensionnées de manière à ce que l'impédance des spires de conducteur de protection enroulées (64) soit au moins partiellement compensée.

5. Tambour de câble selon la revendication 4, **caractérisé en ce que** les bobines de Helmholtz (56, 58) sont dimensionnées de manière à ce que les inductances des bobines de Helmholtz (56, 58) et des spires de conducteur de protection (64) s'éliminent mutuellement lorsque le tambour de câble (10) est approximativement bobiné de moitié.

6. Tambour de câble selon la revendication 4, **caractérisé en ce qu'**il est prévu un dispositif de commutation qui interconnecte ou relie en pont une ou plusieurs spires des bobines de Helmholtz (56, 58) selon l'état de bobinage du tambour de câble (10) au sens d'une adaptation de l'inductance à celle des spires de conducteur de protection (64).
